# EUROPÄISCHE PATENTSCHRIFT

(11) **EP 1 175 569 B1**
(45) Veröffentlichungstag und Bekanntmachung des Hinweises auf die Patenterteilung: **13.08.2003**
(21) Anmeldenummer: 00922526.9
(22) Anmeldetag: 16.03.2000
(51) Int. Cl.: F16D 23/04

(54) **GEBAUTER SYNCHRONKÖRPER MIT ANSCHLAGELEMENT**
BUILT-UP SYNCHRONISER BODY WITH A STOP ELEMENT
ELEMENT DE SYNCHRONISATION COMPOSITE AVEC BUTEE

(30) Priorität: 16.04.1999 DE 19917230
(43) Veröffentlichungstag der Anmeldung: 30.01.2002
(73) Patentinhaber: INA-Schaeffler KG, 91074 Herzogenaurach (DE)
(72) Erfinder: SCHWUGER, Josef, D-91315 Höchstadt (DE); SINNER, Rudolf, D-91088 Bubenreuth (DE); WALDERT, Hartwig, D-91325 Aisch (DE)
(86) Internationale Anmeldenummer: EP0002341
(87) Internationale Veröffentlichungsnummer: WO00063572

(56) Entgegenhaltungen:
- EP-A- 0 717 212
- EP-A- 0 875 689
- DE-A- 2 537 495
- DE-A- 19 821 565
- US-A- 2 201 149
- US-A- 4 131 032
- PATENT ABSTRACTS OF JAPAN vol. 014, no. 395 (M-1016), 27. August 1990 (1990-08-27) & JP 02 150511 A (AISAN IND CO LTD), 8. Juni 1990 (1990-06-08)

## Beschreibung

### Gebiet der Erfindung

Die Erfindung betrifft einen Synchronkörper einer Synchronisiereinrichtung für Schaltgetriebe mit einem Gruhdkörper, wobei
- an dem Grundkörper eine Innenverzahnung sowie eine Außenverzahnung angeordnet ist,
- der Synchronkörper mit der Innenverzahnung verdrehfest in eine Gegenverzahnung einer Getriebewelle eingreift und
- der Synchronkörper mit der Außenverzahnung eine Schiebemuffe aufnimmt
und wobei
- der Grundkörper zumindest aus einem ersten Abschnitt sowie einem zweiten Abschnitt zusammengesetzt ist und
- der erste Abschnitt sowie der zweite Abschnitt jeweils einzeln in einem Umformverfahren aus Blech gefertigt sowie anschließend axial aneinander ausgerichtet und befestigt sind.

### Hintergrund der Erfindung

Synchronkörper verbinden eine Getriebewelle und eine Schiebemuffe einer Synchronisiereinrichtung eines Schaltgetriebes drehfest miteinander. Ein Synchronkörper ist in der Regel formschlüssig über ein an seinem Innenumfang ausgebildetes Keilprofil oder Verzahnungsprofil mit der Getriebewelle verbunden und nimmt über eine Außenverzahnung eine Schiebemuffe in Längsrichtung verschiebbar auf. Je nach Ausführung der Synchroneinheit sind am Synchronkörper axiale Anschläge und Anschläge in Umfangsrichtung für Synchronringe bzw. Reibringe vorgesehen. Die Anschläge sind zumeist am Grundkörper ausgebildet und weisen eine Anschlagfläche auf. Die Anschläge bestimmen und begrenzen den axialen Bewegungsraum der Synchronringe bzw. Reibringe in eine Richtung. Die axiale Ausdehnung und die Ausführung des Grundkörpers ist durch die axiale Position der Anschläge bestimmt.

Wenn die Synchronringe am Synchronkörper in Umfangsrichtung anschlagen, greift der Synchronring beispielsweise über Bolzen oder mit Mitnehmemocken in stimseitig in den Grundkörper eingebrachte Ausnehmung ein. Bei Drehbewegungen des Synchronkörpers wird der Synchronring auf diese Weise in Umfangsrichtung mitgenommen.

Es ist in Schaltgetrieben üblich, die Synchronisiereinrichtung auf der Getriebewelle zwischen zwei Gangrädem anzuordnen. Über eine Synchronisiereinrichtung kann demzufolge wahlweise das links von dieser Synchronisiereinheit angeordnete Gangrad oder das rechts von dieser Synchronisiereinheit angeordnete Gangrad formschlüssig mit der Getriebewelle verbunden werden. Der Synchronkörper muß konstruktiv so ausgebildet sein, daß die auf ihm angeordnete Schiebemuffe axial nach links und rechts verschiebbar ist und daß an beiden Seiten die Bolzen oder die Mitnehmernocken der Synchron- bzw. Reibringe formschlüssig geführt werden können. Da in der Regel das linke und das rechte Gangrad konstruktiv gleich ausgeführt sind, ist auch der Synchronkörper symmetrisch ausgebildet. Es gibt aber auch Anwendungsfälle, -bei denen geringe konstruktive Unterschiede zwischen dem linken und dem rechten Gangrad bestehen, wie z. B. bei der Kombination von Vorwärts- und Rückwärtsgängen. In diesem Falle gibt es auch geringe Unterschiede in der konstruktiven Ausführung der linken und der rechten Hälfte des Synchronkörpers. Dementsprechend ist es auch möglich, daß sich die Anschläge und die Ausnehmungen der linken Seite des Synchronkörpers in ihrer Ausführung und ihrer Lage von denen der rechten Seite des Synchronkörpers unterscheiden.

Die konstruktive Form der Synchronkörper ist abhängig von der konstruktiven Form und Wirkungsweise seiner Anschlußelemente wie z. B. der Synchronringe. So sind z. B. die. oben erwähnten Ausnehmungen als Bohrungen oder Sacklöcher ausgeführt. Die Anschläge stehen aus der Wandung des Grundkörpers hervor oder sind direkt als eine Anschlagfläche in die Stirnseite des Grundkörpers eingearbeitet.

Synchronkörper nach dem derzeitigen Stand der Technik werden entweder spanabhebend oder spanlos gefertigt.

Die spendende Fertigung ist aufwendig und teuer. Dabei werden Rohlinge durch verschiedenste spanabhebende Bearbeitungsverfahren in ihre entgültige Form gebracht. Besonders zeit- und kostenaufwendig ist dabei die Gestaltung der Verzahnung und der oben beschriebenen Ausnehmungen und Anschläge. Die Anschläge, die häufig aus den Stirnseiten des Grundkörpers hervorstehen, werden aufwendig aus dem vollen Material des Rohlings ausgearbeitet. Derartige Synchronringe sind in sehr kompakter und geschlossener Bauweise ausgebildet und haben deshalb einen hohen Material- und Gewichtsanteil. Besonders in der Massenfertigung fallen deshalb sehr hohe Material- und Fertigungskosten an. Vorteilhaft bei derartig ausgebildeten Synchronkörpem ist deren hohe Festigkeit unter Last.

Für die spanlose Fertigung von Synchronkörpern wird als Ausgangsmaterial z. B. Blech oder Bandmaterial verwendet, das durch Trennen und Umformen in seine bestimmungsgemäße Form gebracht wird. Dabei ist die Dicke des Ausgangsmaterials und dessen Gewicht durch funktionelle Erfordernisse und die erforderliche Festigkeit des Fertigteils bestimmt.

Ein Großteil des zur Fertigung eingesetzten Ausgangsmaterials wird tatsächlich zur Bildung der geometrischen Form des Synchronkörpers verwendet und geht nicht durch aufwendige spanende Ausarbeitung verloren. Ein spanlos gefertigter Synchronkörper enthält somit auch kein überflüssiges Material, sondem nur so viel wie für seine Funktion und Festigkeit erforderlich ist. Die Verluste durch Schnittreste bei der Fertigung von spanlosen Synchronkörpern sind relativ gering. Synchronringe aus spanloser Fertigung zeichnen sich durch sparsame Verwendung an Material und somit geringe Materialkosten aus. Da an den Fertigteilen dieser Synchronkörper kein überflüssiges Material verbleibt, haben diese ein sehr geringes Gewicht und reagieren sehr elastisch und dämpfend auf Schwingungen und Stöße. Mit dem Einsatz von spanlos gefertigten Synchronkörpern wird also einerseits ein Beitrag zur Senkung des Fahrzeuggesamtgewichtes geleistet und andererseits der Schaltkomfort erhöht. Durch die hohe Präzision von Teilen, die durch moderne spanlose Fertigungsverfahren hergestellt sind, ist der Anteil an spanender Nacharbeit auf ein Minimum reduziert oder entfällt ganz. Ein weiterer Vorteil von spanlos gefertigten Synchronkörpern besteht in deren kurzen Fertigungszeiten, da zeitaufwendige spanende Bearbeitung entfällt.

Ein Synchronkörper der gattungsbildenden Art ist in DE-A- 25 37 495 beschrieben. Der Synchronkörper ist aus zwei an ihren Stirnseiten miteinander verbundenen Abschnitten gebildet. Die Fügeebende bildet dabei die Quermittelebene des Synchrokörpers. Jeder der Abschnitte ist aus Metallblech in einem spanlosen Umformverfahren geformt und bildet jeweils eine Hälfte der Außenverzahnung und der Innenverzahnung sowie des Grundkörpers.

Nachteilig bei derartigen Ausführungen von Synchronringen ist, daß ihre Gestalt in Abhängigkeit von der Entformungsrichtung hur relativ einfach ausgeführt werden kann. Aus den Stirnseiten des Grundkörpers hervorstehende Anschläge sind in die Formteile nur schwer oder nicht einzubringen. Von Vorteil ist, daß spanlos gefertigte Synchronkörper in der Massenfertigung sehr material- und zeitsparend hergestellt werden können. Die Kosten für ihre Fertigung sind deshalb verhältnismäßig gering.

Aus oben ausgeführten Gründen bildet die konstruktive Ausführung von spanabgebend und spanlos gefertigten Synchronkörpem bisher einen vompromiß zwischen ihrer funktionell notwendigen Form, ihrer Fertigbarkeit und den Kosten für ihre Fertigung, der nicht selten zu Lasten einer optimalen Funktion geht.

### Zusammenfassung der Erfindung

Aufgabe der Erfindung ist es daher, einen Synchronkörper der vorgenannten Gattung zu schaffen, der bei kostengünstiger Fertigung insbesonderen bei hohen Produktionsstückzahlen eine nahezu uneingeschränkte Formgestaltung während seiner Fertigung zuläßt und der die vorgenannten Nachteile die sich aus der spanabhebenden Fertigung und einer spanlosen Fertigung von Synchronkörpern ergeben, vermeidet. Dabei sind insbesondere die vorteilhaften Merkmale bei der Lösung der Aufgabe einzubeziehen, die sich aus der Fertigung und bei der Anwendung von spanlos im Umformverfahren gefertigten Teilen ergeben.

Diese Aufgabe wird nach dem kennzeichnenden Teil des Anspruches 1 dadurch gelöst, daß der Grundkörper mit wenigstens einem separat gefertigten sowie unlösbar an dem Grundkörper befestigten Anschlag versehen ist.

Einzeln unabhängig vom Grundkörper des Synchronkörpers gefertigte Anschläge gestatten vielfältige Formen der Anschläge und damit auch des Synchronkörpers. Der Synchronkörper oder der Grundkörper kann aus Standartumformteilen geformt werden an dem je nach Verwendungszweck unterschiedliche Anschläge befestigt werden. Mit einer derartigen Lösung ist es möglich auch an spanlos gefertigten Synchronkörpern beliebig ausgeführte Anschläge zu verwirklichen. Die Werkzeugkosten, ein bedeutender Faktor in der Massenfertigung von Ziehteilen, werden durch Verwendung von Standardteilen und relativ einfachen Ausführungen gering gehalten. Besonders kostengünstig und materialsparend ist die Massenfertigung derartiger Anschläge, wenn diese, wie eine Ausgestaltung der Erfindung vorsieht, aus einem Blech- oder Bandmaterial geformt sind. Es ist denkbar, derartige Teile als gestanzte, gepreßte oder gezogene Blechteile aus beliebigem Eisenwerkstoff als Standardumformteile auszuführen. Die Vorteile von spanlos aus Blech- oder Bandmaterial gefertigten Teilen wurden schon im Text zum Hintergrund der Erfindung beschrieben.

Von Vorteil ist die Einzelgestaltung der Anschläge auch für die Anwendungsfälle, bei denen konstruktive Unterschiede zwischen der linken und der rechten Seite des Synchronkörpers bestehen. Konstruktive Unterschiede zwischen den Anschlägen der linken und rechten Seite des Synchronkörpers sind einfach durch die Wahl von sich unterscheidenden Einzelteilen zu realisieren.

Bevorzugte Ausführungsformen der Erfindung sehen vor, daß der Anschlag durch eine Scheibe oder einen beliebig gestalteten Ring gebildet ist und die Scheibe sowie der Ring konzentrisch zur Längsmittelachse des Synchronkörpers angeordnet sind. Scheiben und Ringe sind in der Massenfertigung kostengünstig durch z. B. Stanzen, Prägen oder als einfache Drehteile herzustellen. Die axiale Lage der Anschlagflächen derartiger Anschläge am Synchronkörper wird durch die Dicke der Scheiben oder Ringe bestimmt oder ist durch ihre Position vorgegeben an der sie am Grundkörper befestigt sind.

Es ist möglich die Scheiben bzw. Ringe direkt an den Stirnseiten des Grundkörpers zu befestigen oder wie eine weitere Ausgestaltung der Erfindung vorsieht, den Ring bzw. die Scheibe mit ihrer inneren Umfangsfläche an einem in axiale Richtung hervorstehenden von der Stirnseite des Grundkörpers ausgehenden zylinderförmig ausgebildeten Abschnitt des Grundkörpers anzuordnen. Dabei ist es denkbar, an dem zylinderförmigen Abschnitt der Nabe eine Innenverzahnung des Synchronkörpers auszubilden. Der zylinderförmige Abschnitt ist in weiterer Ausgestaltung der Erfindung als Verliersicherung bzw. Befestigung des Ringes am Grundkörper vorgesehen. Der auf dem zylinderförmigen Abschnitt angeordnete und zentrierte Ring wird dazu in radialer Richtung von zumindest einem Vorsprung hintergriffen, der am Ende dieses zylindrischen Abschnittes angeordnet ist. Ein derartiger Vorsprung ist z. B. als eine oder mehrere Prägungen oder als ein umlaufender Bord ausgebildet. Die Vorsprünge sind aus dem Material des zylindrischen Abschnittes ausgeformt.

Besonders für Anwendungsfälle bei denen die axialen Anschläge weit über die Stirnseiten des Grundkörpers hinausragen müssen bzw. in denen hohe Axialkräfte auf die Anschläge wirken und unabhängig davon ein sehr leicht gebauter Synchronkörper benötigt wird, ist es sinnvoll ein dünnwandiges Blech oder Bandmaterial so zu verarbeiten, daß aus diesem ein ringförmiger Körper gebildet wird, der mit einem abgewinkelten Kragen an der Stirnseite des Grundkörpers anliegt. Die axiale Ausdehnung des Kragens ist durch die axiale Position des Anschlages am Synchronkörper bestimmt. Der Kragen übernimmt die Funktion eines Abstandshalters sowie einer Stütze gegen hohe Axialkräfte. Da dünnwandiges Blech eingesetzt ist sind die Materialkosten für Herstellung eines derartigen Anschlages sehr gering und der Synchronkörper kann in Leichtbauweise ausgeführt werden.

Unabhängig von den aufgeführten ringförmigen Ausführungen der Anschläge ist es auch denkbar, am Umfang der Stirnseite eines Synchronkörpers mehrere segmentartig ausgebildete Anschläge zueinander beabstandet anzuordnen. Die Abstände zwischen den einzelnen Anschlagsegmenten bilden die Ausnehmungen in die beispielsweise die Mitnehmemocken der Synchronringe eingreifen. Möglich ist auch, in ringförmig gestaltete Anschläge durch Stanzen entsprechende Ausnehmungen einzubringen.

Als bevorzugte Befestigungsform der Anschläge an dem Grundkörper des Synchronkörpers ist Schweißen vorgesehen.

Schließlich wird was jedoch nicht Bestandteil der Erfindung ist, die Gestaltung und Fertigung eines Synchronkörpers dadurch vereinfacht, daß an einem Synchronkörper der gattungsbildenden Art die Verzahnung separat in einem spanlosen Umformverfahren aus Blech oder Bandmaterial gefertigt und anschließend unlösbar an dem Grundkörper befestigt ist. Die Vorteile liegen auch hier insbesondere in der Verwendung von Standardumformteilen die sich in der Massenfertigung kostengünstig herstellen lassen. Zusammen mit der Verwendung von Anschlägen gemäß Erfindung sind die Gestaltungsmöglichkeiten eines spanlos gefertigten Synchronkörpers somit praktisch unbegrenzt. Bevorzugt ist die Verzahnung durch Schweißen am Grundkörper zu befestigen.

### Kurze Beschreibung der Zeichnung

Die Endung wird nachfolgend anhand mehrerer Ausführungsbeispiele erläutert. Es zeigen:
- Figur 1: die Hauptansicht eines spanlos gefertigten Synchronkörpers mit einem ringförmig ausgebildeten Anschlag,
- Figur 2: einen Längsschnitt durch den Synchronkörper nach Figur 1 entlang der Linie II-II,
- Figur 3: die Hauptansicht eines Synchronkörpers mit segmentartig ausgebildeten Anschlägen,
- Figur 4: eine Schnittdarstellung durch ein weiteres Ausführungsbeispiel eines Synchronkörpers mit einem Anschlag, der sich über einen Kragen an den Stirnseiten des Grundkörpers abstützt,
- Figur 5: die Schnittdarstellung eines weiteren Ausführungsbeispieles eines Synchronkörpers mit scheibenförmig ausgebildeten Anschlägen und
- Figur 6: ein Ausführungsbeispiel eines Synchronkörpers mit ringförmig ausgebildeten Anschlägen und einer separat gefertigten sowie mit dem Grundkörper verschweißten Verzahnung im Schnitt.

### Ausführliche Beschreibung der Zeichnung

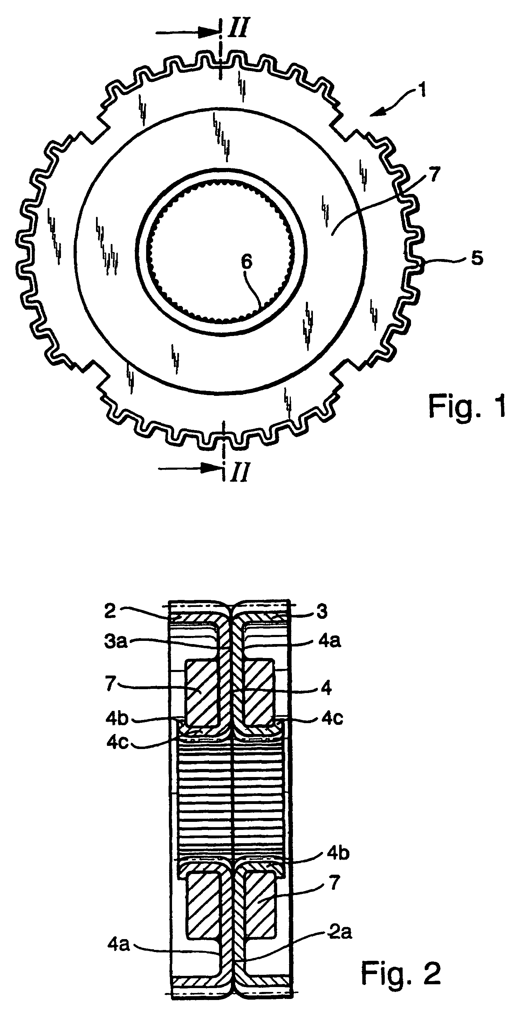

Figur 1 und Figur 2 zeigen einen Synchronkörper 1, wobei in Figur 2 ein Schnitt entlang der Linie II-II aus Figur 1 dargestellt ist. Der Synchronkörper 1 ist aus einem. ersten Abschnitt 2 und einem zweiten Abschnitt 3 gebildet. Der erste Abschnitt 2 sowie der zweite Abschnitt 3 sind aus dünnwandigem Blech gefertigt und bilden mit ihren aneinandergefügten Stirnseiten 2a, 3a den Grundkörper 4 des Synchronkörpers 1. An dem Grundkörper 4 ist eine Außenverzahnung 5 und eine Innenverzahnung 6 ausgebildet. An den Stirnseiten 4a des Grundkörpers 4 ist jeweils ein Anschlag 7 befestigt. Der Anschlag 7 ist als ein Ring 8 ausgebildet. Der Ring 8 ist auf einem von der Stirnseite des Grundkörpers 4a wegweisenden zylinderförmig ausgebildeten Abschnitt 4b des Grundkörpers 4 zentriert und wird von einem als Bord ausgebildetem Vorsprung 4c hintergriffen und an dem Synchronkörper 1 gehalten. Zusätzlich ist der Ring 8 mit dem Grundkörper 4 verschweißt.

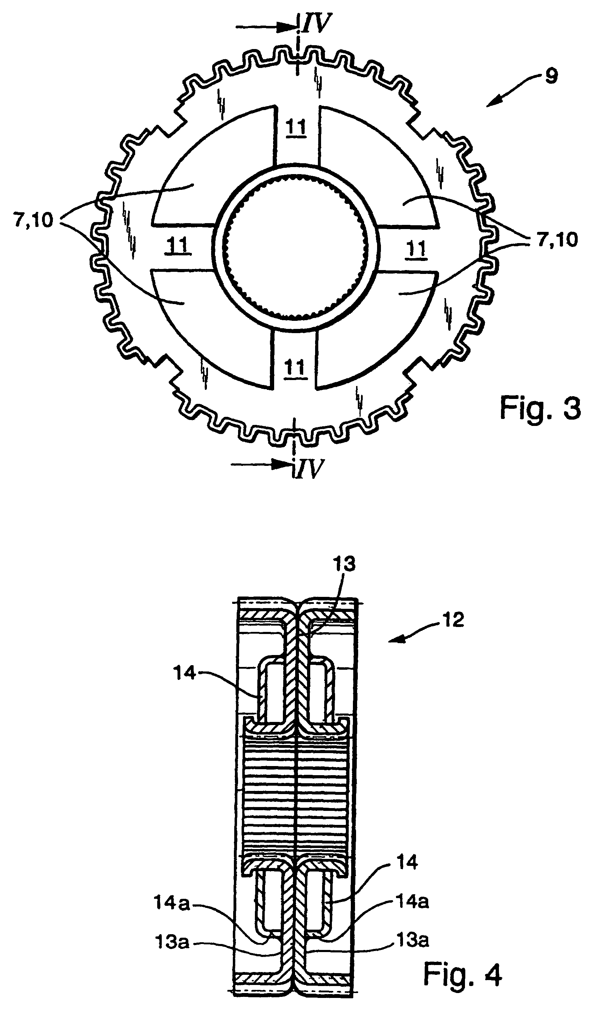

Figur 3 zeigt einen Synchronkörper 9 dessen Anschläge 7 durch Anschlagsegmente 10 gebildet sind. Die Anschlagsegmente 10 sind zueinander mit gleichmäßigen Abständen 11 angeordnet. In die Abstände 11 greifen nicht dargestellte Mitnehmemocken eines Synchronringes ein.

Ein weiteres Ausführungsbeispiel der Erfindung ist mit einer Schnittdarstellung eines Synchronkörpers 12 in Figur 4 beschrieben. An dem Grundkörper 13 des Synchronkörpers 12 ist beidseitig jeweils ein aus Blech geformter Anschlag 14 verschweißt. Am Anschlag 14 ist ein in axiale Richtung weisender Kragen 14a ausgebildet, der an der Stirnseite 13a des Grundkörpers anliegt. Der Anschlag 14 ist auf einem von der Stirnseite 13a weisenden zylinderförmig ausgebildeten Abschnitt 13b des Grundkörpers 13 zentriert.

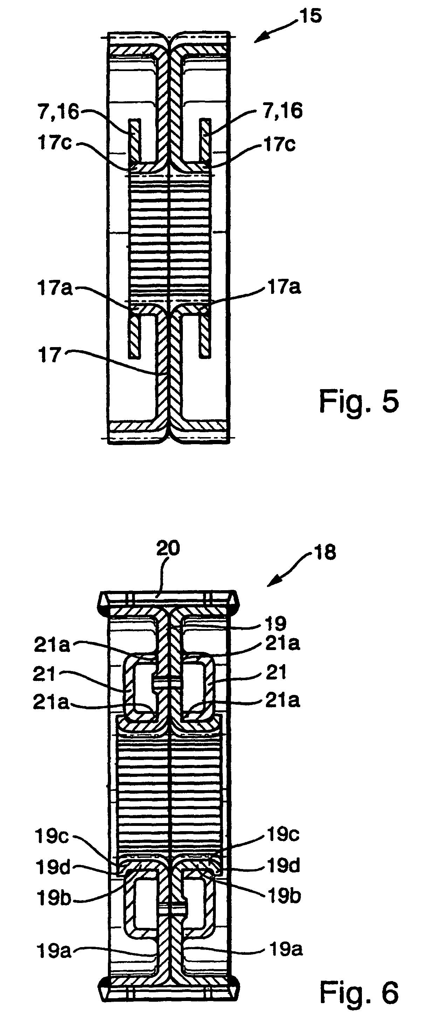

Figur 5 zeigt einen Längsschnitt durch einen Synchronköpper 15 dessen Anschlag 7 durch eine Scheibe 16 gebildet ist. Der Grundkörper 17 des Synchronkörpers 15 ist mit einem zylinderförmig ausgebildeten Abschnitt 17a versehen, an dessen freiem Ende 17b die Scheibe 16 verschweißt ist.

In Figur 6 ist eine Ausführungsform der Erfindung beschrieben, bei der ein Synchronkörper 18 einen Grundkörper 19 aufweist an dessen Außenumfang eine separat gefertigte Außenverzahnung 20 befestigt ist. Der Synchronkörper 18 ist mit ringförmig aus Blech gebildeten Anschlägen 21 versehen, die in ihrem Querschnittsprofil U-förmig ausgebildet sind. Die freien Enden 21a der Anschläge 21 liegen an den Stirnseiten 19 a des Grundkörpers 19 an. An dem Grundkörper 19 sind zylinderförmige Abschnitte 19b ausgebildet, an deren freien Enden 19c ein in radiale Richtung weisender. bordförmig ausgebildeter Vorsprung 19d hervorsteht. Jeder Anschlag 19 ist auf dem Abschnitt 19b angeordnet und von einem Vorsprung 19d in radiale Richtung hintergriffen.

### Bezugszeichen

- 1: Synchronkörper
- 2: erster Abschnitt
- 2a: Stirnseite
- 3: zweiter Abschnitt
- 3a: Stirnseite
- 4: Grundkörper
- 4a: Stirnseite
- 4b: Abschnitt
- 4c: Vorsprung
- 5: Außenverzahnung
- 6: Innenverzahnung
- 7: Anschlag
- 8: Ring
- 9: Synchronkörper
- 10: Anschlagsegment
- 11: Abstand
- 12: Synchronkörper
- 13: Grundkörper
- 13a: Stirnseite
- 13b: Abschnitt
- 14: Anschlag
- 14a: Kragen
- 15: Synchronkörper
- 16: Scheibe
- 17: Grundkörper
- 17a: Abschnitt
- 17b: freies Ende
- 18: Synchronkörper
- 19: Grundkörper
- 19a: Stirnseite
- 19b: Abschnitt
- 19c: freies Ende
- 19d: Vorsprung
- 20: Außenverzahnung
- 21: Anschlag
- 22: freies Ende

## Patentansprüche

1. Synchronkörper (1, 9, 12, 15, 18) einer Synchronisiereinrichtung für Schaltgetriebe mit einem Grundkörper (4, 13, 17, 19); wobei
- an dem Grundkörper (4, 13, 17, 19) eine Innenverzahnung (6) sowie eine Außenverzahnung (5, 20) angeordnet ist,
- der Synchronkörper mit der Innenverzahnung (6) verdrehfest in eine Gegenverzahnung einer Getriebewelle eingreift und
- der Synchronkörper (1, 9, 12, 15, 18) mit der Außenverzahnung (5, 20) eine Schiebemuffe aufnimmt,
und wobei
- der Grundkörper (4, 13, 17, 19) zumindest aus einem ersten Abschnitt (2) sowie einem zweiten Abschnitt (3) zusammengesetzt ist und
- der erste Abschnitt (2) sowie der zweite Abschnitt (3) jeweils einzeln in einem Umformverfahren aus Blech gefertigt sowie anschließend axial aneinander ausgerichtet und befestigt sind, **dadurch gekennzeichnet, daß** der Grundkörper (4, 13, 17, 19) mit wenigstens einem separat gefertigten sowie unlösbar an den Grundkörper (4, 13, 17, 19) befestigten axialen Anschlag (7, 10, 14, 21) zum Begrenzen von axialen Bewegungen eines Reibringes der Synchronisiereinrichtung versehen ist.

2. Synchronkörper nach Anspruch 1, **dadurch gekennzeichnet, daß** der Anschlag (7, 14, 21) spanlos aus einem Blech oder Bandmaterial geformt ist.

3. Synchronkörper nach Anspruch 1, **dadurch gekennzeichnet, daß** der Anschlag durch eine Scheibe (16) oder einen Ring (8) gebildet ist und die Scheibe (16) oder der Ring (8) konzentrisch zur Längsmittelachse des Synchronkörpers (1, 15) angeordnet ist.

4. Synchronkörper nach Anspruch 3, **dadurch gekennzeichnet, daß** der Ring (8) mit seiner inneren Umfangsfläche oder die Scheibe (16) mit ihrer inneren Umfangsfläche an einem in axiale Richtung hervorstehenden sowie von der Stirnseite des Grundkörpers (4, 17) weisenden zylinderförmig ausgebildeten Abschnitt (4b, 17a) des Grundkörpers (4, 17) angeordnet ist.

5. Synchronkörper nach Anspruch 3, **dadurch gekennzeichnet, daß** der Ring (8) mit seiner inneren Umfangsfläche an einen in axiale Richtung hervorstehenden sowie von der Stimseite des Grundkörpers weisenden zylinderförmig ausgebildeten Abschnitt (4b) des Grundkörpers (4) angeordnet ist und daß der Ring (8) durch zumindest einen an dem Ende des Abschnittes (4b) ausgebildeten Vorsprung (4c) radial hintergriffen ist.

6. Synchronkörper nach Anspruch 1, **dadurch gekennzeichnet, daß** der Anschlag (14) aus Blech oder Bandmaterial ringförmig geformt ist und daß der Anschlag (14) zumindest einen abgewinkelten sowie in axiale Richtung weisenden Kragen (14a) aufweist und der Anschlag (14) mit dem in axiale Richtung weisenden freien Ende des Kragens (14a) an der Stirnseite (13a) des Grundkörpers (13) anliegt.

7. Synchronkörper nach Anspruch 1, **dadurch gekennzeichnet, daß** der Anschlag (7, 14, 21) an dem Grundkörper (4, 13, 17, 19) verschweißt ist.

## Claims

1. Synchronizer body (1, 9, 12, 15, 18) of a synchronizing device for a manual-shift transmission, with a basic body (4, 13, 17, 19),
- an internal toothing (6) and an external toothing (5, 20) being arranged on the basic body (4, 13, 17, 19),
- the synchronizer body engaging by means of the internal toothing (6) fixedly in terms of rotation into a countertoothing of a transmission shaft, and
- the synchronizer body (1, 9, 12, 15, 18) receiving a sliding sleeve by means of the external toothing (5, 20),
and
- the basic body (4, 13, 17, 19) being composed at least of a first portion (2) and of a second portion (3), and
- the first portion (2) and the second portion (3) being manufactured in each case individually from sheet metal in a forming method and subsequently being aligned axially with one another and fastened to one another,
**characterized**
- **in that** the basic body (4, 13, 17, 19) is provided with at least one separately manufactured axial stop (7, 10, 14, 21), fastened unreleasably to the basic body (4, 13, 17, 19), for the limitation of axial movements of a friction ring of the synchronizing device.

2. Synchronizer body according to Claim 1, **characterized in that** the stop (7, 14, 21) is formed in a non-cutting manner from sheet metal or strip material.

3. Synchronizer body according to Claim 1, **characterized in that** the stop is formed by a disc (16) or a ring (8), and the disc (16) or ring (8) is arranged concentrically to the longitudinal mid-axis of the synchronizer body (1, 15).

4. Synchronizer body according to Claim 3, **characterized in that** the ring (8) is arranged with its inner circumferential surface or the disc (16) with its inner circumferential surface on a cylindrical portion (4b, 17a) of the basic body (4, 17), the said cylindrical portion projecting in the axial direction and pointing away from the end face of the basic body (4, 17).

5. Synchronizer body according to Claim 3, **characterized in that** the ring (8) is arranged with its inner circumferential surface on a cylindrical portion (4b) of the basic body (4), the said cylindrical portion projecting in the axial direction and pointing away from the end face of the basic body, and **in that** the ring (8) has engaged radially behind it at least one projection (4c) formed at the end of the portion (4b).

6. Synchronizer body according to Claim 1, **characterized in that** the stop (14) is formed annularly from sheet metal or strip material, and **in that** the stop (14) has at least one angled collar (14a) pointing in the axial direction, and the stop (14) comes to bear, with the axially pointing free end of the collar (14a), against the end face (13a) of the basic body (13).

7. Synchronizer body according to Claim 1, **characterized in that** the stop (7, 14, 21) is welded to the basic body (4, 13, 17, 19).

## Revendications

1. Elément de synchronisation (1, 9, 12, 15, 18) d'un dispositif de synchronisation pour des transmissions à changement de vitesses comprenant un élément de base (4, 13, 17, 19) ; dans lequel
- une denture interne (6) ainsi qu'une denture externe (5, 20) sont prévues sur l'élément de base (4, 13, 17, 19),
- l'élément de synchronisation vient en prise de manière fixe en rotation avec la denture interne (6) dans une denture conjuguée d'un arbre de transmission et
- l'élément de synchronisation (1, 9, 12, 15, 18) reçoit avec la denture externe (5, 20) un manchon coulissant,
et où
- l'élément de base (4, 13, 17, 19) est composé au moins d'une première portion (2) et d'une deuxième portion (3) et
- la première portion (2) ainsi que la deuxième portion (3) sont fabriquées chacune séparément dans un procédé de formage de tôle et sont alignées et fixées ensuite axialement l'une contre l'autre, **caractérisé en ce que** l'élément de base (4, 13, 17, 19) est pourvu d'au moins une butée (7, 10, 14, 21) axiale fabriquée séparément et fixée de manière indesserrable sur l'élément de base (4, 13, 17, 19), pour la limitation des mouvements axiaux d'un anneau de friction du dispositif de synchronisation.

2. Elément de synchronisation selon la revendication 1, **caractérisé en ce que** la butée (7, 14, 21) est formée sans enlèvement de copeaux à partir d'une tôle ou d'un matériau en bande.

3. Elément de synchronisation selon la revendication 1, **caractérisé en ce que** la butée est formée par un disque (16) ou un anneau (8) et le disque (16) ou l'anneau (8) est disposé concentriquement à l'axe médian longitudinal de l'élément de synchronisation (1, 15).

4. Elément de synchronisation selon la revendication 3, **caractérisé en ce que** l'anneau (8) est disposé avec sa face périphérique intérieure, ou le disque (16) est disposé avec sa face périphérique intérieure, sur une portion (4b, 17a) de l'élément de base (4, 17) réalisée en forme de cylindre saillant dans la direction axiale et tourné à l'opposé du côté frontal de l'élément de base (4, 17).

5. Elément de synchronisation selon la revendication 3, **caractérisé en ce que** l'anneau (8) est disposé avec sa face périphérique intérieure sur une portion (4b) de l'élément de base (4) réalisée en forme de cylindre saillant dans la direction axiale et tourné à l'opposé du côté frontal de l'élément de base (4), et **en ce que** l'anneau (8) est engagé par l'arrière par au moins une saillie (4c) réalisée à l'extrémité de la portion (4b).

6. Elément de synchronisation selon la revendication 1, **caractérisé en ce que** la butée (14) est formée en tôle ou en matériau en bande de forme annulaire et **en ce que** la butée (14) présente au moins un rebord (14a) coudé et tourné dans la direction axiale, et la butée (14) s'applique avec l'extrémité libre du rebord (14a) tournée dans la direction axiale contre le côté frontal (13a) de l'élément de base (13).

7. Elément de synchronisation selon la revendication 1, **caractérisé en ce que** la butée (7, 14, 21) est soudée sur l'élément de base (4, 13, 17, 19).
